# EUROPÄISCHE PATENTSCHRIFT

(11) **EP 2 673 107 B1**
(45) Veröffentlichungstag und Bekanntmachung des Hinweises auf die Patenterteilung: **14.12.2016**
(21) Anmeldenummer: 12704247.1
(22) Anmeldetag: 06.02.2012
(51) Int. Cl.: B23K 26/08, B23K 26/067, G02B 6/04

(54) **LASERBEARBEITUNGSVORRICHTUNG**
LASER-MACHINING DEVICE
DISPOSITIF D'USINAGE LASER

(30) Priorität: 07.02.2011 DE 102011003686
(43) Veröffentlichungstag der Anmeldung: 18.12.2013
(73) Patentinhaber: TRUMPF Laser-und Systemtechnik GmbH, 71254 Ditzingen (DE)
(72) Erfinder: BROCKMANN, Rüdiger, 71735 Eberdingen (DE); HUONKER, Martin, 78661 Dietingen (DE)
(74) Vertreter: Kohler Schmid Möbus Patentanwälte
(86) Internationale Anmeldenummer: PCT/EP2012/051950
(87) Internationale Veröffentlichungsnummer: WO 2012/107395

(56) Entgegenhaltungen:
- EP-A1- 1 393 848
- DE-A1- 2 830 261
- DE-A1-102009 027 348
- DE-U1-202006 018 356
- US-A- 5 430 816
- US-A1- 2004 033 037
- US-A1- 2009 108 052

## Beschreibung

Die Erfindung betrifft eine Laserbearbeitungsvorrichtung für eine Laserwerkstückbearbeitung mit einem Laser zum Erzeugen von Laserstrahlung und mit zumindest zwei Laserwerkzeugen, denen die Laserstrahlung mittels eines Lichtleitkabels zuführbar ist, wobei das Lichtleitkabel ein eingangsseitiges Ende mit mindestens zwei optischen Faserkernen und mehrere ausgangsseitige Enden mit jeweils einem der optischen Faserkerne aufweist und wobei die optischen Faserkerne mit jeweils einem der Laserwerkzeuge verbunden sind.

Eine derartige Laserbearbeitungsvorrichtung ist beispielsweise aus der US 2009/108052 A1 bekannt geworden.

US 2009/108052 A1 offenbart eine Vielzahl von Lichtwellenleitern mit jeweils einem optischen Faserkern und einem diesen umgebenden Fasermantel, wobei die Lichtwellenleiter durch eine Außenhülle zu einem Faserbündel in zufälliger und loser Anordnung zusammenfasst sind. Ein Laserstrahl, dessen Strahldurchmesser dem Faserbündeldurchmesser entspricht, wird gleichzeitig in alle Lichtwellenleiter eingekoppelt und in kleineren Faserbündeln den Laserwerkzeugen zugeführt.

Weiterhin ist aus der EP 1 591 189 A1 eine Laserbearbeitungsvorrichtung bekannt, bei der die von dem Laser erzeugte Laserstrahlung den einzelnen Laserwerkzeugen über mehrere mit diesen verbundene Lichtleitkabel zuführbar ist. Die Lichtleitkabel erfordern laserseitig jeweils separate Anschlüsse, die, bedingt durch einen jeweiligen Querschnitt der Lichtleiterkabel bzw. deren Anschlussstecker in einem vorgegebenen Mindestabstand voneinander angeordnet sind. Dies steht einer kompakten Bauart entgegen. Zudem ergeben sich, insbesondere bei einem Wechsel der Lichtleitkabel, ein erheblicher Bedienaufwand und eine in der Praxis nicht zu unterschätzende Gefahr einer Verschmutzung, beispielsweise von optisehen Koppelflächen eines optischen Faserkerns der einzelnen Lichtleitkabel, was zu Leistungsstörungen der Laserwerkzeuge führen kann.

Der vorliegenden Erfindung liegt demgegenüber die Aufgabe zugrunde, eine eingangs genannte Laserbearbeitungsvorrichtung anzugeben, die die Nachteile des Standes der Technik überwindet.

Diese Aufgabe wird durch eine Laserbearbeitungsvorrichtung mit den in Patentanspruch 1 angegebenen Merkmalen gelöst.

Der mit der erfindungsgemäßen Laserbearbeitungsvorrichtung verbundene Vorteil besteht im Wesentlichen darin, dass, bedingt durch das einzelne eingangsseitige Ende des Lichtleitkabels, lediglich ein einziger laserseitiger Anschluss erforderlich ist. Dadurch wird ein besonders kompakter und konstruktiv vereinfachter Aufbau ermöglicht. Auch wird dadurch die Handhabung der Laserbearbeitungsvorrichtung insgesamt erleichtert und die Gefahr einer Verschmutzung von eingangsseitigen optischen Koppelflächen der Faserkerne bzw. eines dem Lichtleitkabel laserseitig zugeordneten Anschlusses verringert. Auch kann so anschlussseitigen Fehlfunktionen vorgebeugt werden. Die Faserkerne des Lichtleitkabels sind von einem gemeinsamen Cladding umhüllt, wodurch eine sichere Verlegung des Lichtleitkabels, etwa im Gefahrenbereich bewegbarer Maschinenteile der Laserbearbeitungsvorrichtung, erleichtert wird. Das Lichtleitkabel kann eine der Anzahl der Laserwerkzeuge entsprechende Anzahl von Faserkernen oder aber eine über die Anzahl der Laserwerkzeuge hinausgehende Anzahl von Faserkernen aufweisen. Im letztgenannten Fall kann eine Übertragung der Laserstrahlung an die Laserwerkzeuge auch im Falle einer Beschädigung eines Faserkerns des Lichtleitkabels gewährleistet werden. Unerwünschte Ausfallzeiten der Laserbearbeitungsvorrichtung werden dabei minimiert und ein kostenintensiver Austausch des gesamten Lichtleitkabels vermieden. Durch die Schalteinrichtung zum wahlweisen Einkoppeln der Laserstrahlung in einen oder mehrere der Faserkerne des Lichtleitkabels kann die Laserstrahlung zu einem gegebenen Zeitpunkt bedarfsweise jeweils einem der Laserwerkzeuge oder auch - unter Aufspaltung der Laserstrahlung - zeitgleich mehreren Laserwerkzeugen zugeführt werden. Dies ist im Hinblick auf Werkstückbearbeitungszeiten sowie die Handhabung der Laserbearbeitungsvorrichtung von Vorteil. Weiterhin sind infolge der eingangsseitig dicht beieinanderliegenden optischen Faserkerne des Lichtleitkabels nur sehr geringe Verstellwege, beispielsweise optischer Umlenkmittel, für ein entsprechendes Einkoppeln der Laserstrahlung in die Faserkerne erforderlich. Zudem können eingesetzte optische Umlenkmittel besonders kompakt ausgeführt werden. Dadurch können besonders kurze Schaltzeiten der Schalteinrichtung, d.h. eine für eine Ansteuerung eines jeweiligen Faserkerns des Lichtleitkabels erforderliche Zeitdauer, sowie ein insgesamt kompakter Aufbau der Schalteinrichtung realisiert werden.

Nach einer bevorzugten Weiterbildung der Erfindung sind Anschlussmittel vorgesehen, mittels derer das eingangsseitige Ende des Lichtleitkabels in einer definierten Position und in einer definierten Drehlage gegenüber der Schalteinrichtung positionierbar ist. Dadurch können die optischen Faserkerne mit ihren eingangsseitigen optischen Koppelflächen gemeinsam in einer für das Einkoppeln der Laserstrahlung betriebsoptimalen Weise gegenüber der Schalteinrichtung, beispielsweise in einer Brennebene einer Sammellinse, angeordnet werden. Auch kann durch insgesamt ein Justieren der Laserschalteinrichtung erleichtert werden.

Die Anschlussmittel weisen vorzugsweise eine an der Schalteinrichtung angeordnete Anschlussbuchse und einen am Lichtleitkabel angeordneten Anschlussstecker auf, der in der Anschlussbuchse positionierbar ist. Dadurch kann das eingangsseitige Ende des Lichtleitkabels reproduzierbar und präzise in der vorbestimmten Position bzw. in der vorbestimmten Drehlage gegenüber der Schalteinrichtung positioniert werden.

Damit die Laserstrahlung während des Betriebs der Laserbearbeitungsvorrichtung nicht etwa aufgrund einer unerwünschten Änderung der Drehlage des eingangsseitigen Endes des Lichtleitkabels in dessen Cladding eingestrahlt wird, ist vorzugsweise eine Verdrehsicherung vorgesehen. Die Verdrehsicherung ist dabei insbesondere derart ausgelegt, dass ein maximaler Verdrehwinkel des Lichtleitkabels, und damit der optischen Faserkerne, gegenüber der Schalteinrichtung von 0,3°, insbesondere 0,2°, nicht überschritten wird.

Die optischen Faserkerne weisen bevorzugt eingangsseitige optische Koppelflächen auf, die auf einer eine Längsachse des Lichtleitkabels schneidenden Querachse des Lichtleitkabels angeordnet sind. Unter den optischen Koppelflächen werden vorliegend entweder die in der Praxis zumeist präzise geschliffenen eingangsseitigen Stirnflächen der optischen Faserkerne selbst oder aber Stirnflächen von Führungsröhrchen verstanden, die im Anschlussstecker des Lichtleitkabels einen jeweiligen Faserkern des Lichtleitkabels aufnehmen (sogenannte Ferrulen) und ggf. gegenüber dem Anschlussstecker fixieren.

Die eingangsseitigen optischen Koppelflächen der optischen Faserkerne können dabei insbesondere symmetrisch zu der Querachse angeordnet sein. Dadurch kann das Lichtleitkabel einen jeweilig erforderlichen minimalen Querschnitt aufweisen, und die Faserkerne sind zugleich innerhalb des Lichtleitkabels durch einen jeweilig maximalen Abstand zur Claddingaußenfläche geschützt. Die bekannte Anordnung der jeweiligen optischen Koppelflächen der einzelnen Faserkerne zueinander sowie deren jeweilige bekannte Größe ermöglichen des Weiteren ein vereinfachtes Justieren der Laserschalteinrichtung, da die Position einer Stirnfläche der Faserkerne als Bezugsgröße für die Ansteuerung der weiteren Faserkerne, d.h. ein Einkoppeln der Laserstrahlung in dieselben, herangezogen werden kann.

Sofern das Lichtleitkabel eine gerade Mehrzahl von optischen Faserkernen aufweist, können deren optische Koppelflächen insbesondere paarweise auf jeweiligen Querachsen angeordnet sein. Auch können die optischen Koppelflächen der Faserkerne kreisförmig um die Längsachse des Lichtleitkabels herum angeordnet sein.

Zwecks eines möglichst effizienten Einkoppelns der Laserstrahlung in die Faserkerne des Lichtleitkabels hat es sich darüber hinaus als vorteilhaft erwiesen, dass zumindest ein Teil der optischen Faserkerne des Lichtleitkabels einen unterschiedlichen Querschnitt aufweist. Dabei kann insbesondere ein im Lichtleitkabel zu dessen Längsachse radial weiter außen angeordneter optischer Faserkern einen größeren Querschnitt aufweisen, als ein radial weiter innen angeordneter Faserkern. Dadurch können Toleranzen der einzelnen Faserkerndurchmesser sowie Lageabweichungen der Faserkerne im Lichtleitkabel bzw. Anschlussstecker auf einfache Weise ausgeglichen werden.

Die Schalteinrichtung weist vorzugsweise optische Umlenkmittel zum Einkoppeln der Laserstrahlung in die optischen Faserkerne des Lichtleitkabels auf. Die optischen Umlenkmittel umfassen dabei vorzugsweise ein keilförmiges optisches Prisma, eine Sammellinse, ein holografisches optisches Element, ein diffraktives optisches Element, einen Umlenk-, Dach- und/oder einen Facettenspiegel.

Vorzugsweise ist zumindest ein Teil der optischen Umlenkmittel um zumindest eine, vorzugsweise zwei, Justierachse(n) verschwenkbar. Dadurch kann die Laserstrahlung in die einzelnen Faserkerne des Lichtleitkabels unabhängig von einer geometrischen Anordnung derer eingangsseitigen optischen Koppelflächen gegenüber der Schalteinrichtung zuverlässig eingekoppelt werden. Auch können Lagetoleranzen der optischen Faserkerne bzw. deren eingangsseitigen optischen Koppelflächen auf einfache und präzise Weise ausgeglichen werden.

Der Einsatz des Prismas ermöglicht ein besonders einfaches und präzises Umlenken der Laserstrahlung, wobei insbesondere auch sehr kleine Ablenkwinkel realisiert werden können. Dadurch kann die Laserstrahlung auch in dicht beieinander liegend angeordnete Faserkerne des Lichtleitkabels verlustfrei bzw. ohne einen größeren Verlust eingekoppelt werden. Das Prisma kann nach einer Ausführungsform (permanent) im Strahlengang der Laserstrahlung angeordnet sein. In diesem Fall kann die Laserstrahlung durch einfaches Verdrehen des Prismas um dessen Justierachsen in die einzelnen Faserkerne des Lichtleitkabels eingekoppelt werden. Diese Bauart ist beispielsweise bei einem Lichtleitkabel, bei dem die Faserkerne am eingangsseitigen Ende des Lichtleitkabels kreisförmig um die Längsachse des Lichtleitkabels herum angeordnet sind, von Vorteil.

Im konstruktiv einfachsten Fall ist das Prisma in den Strahlengang der Laserstrahlung bewegbar, insbesondere in diesen einschwenkbar. Dadurch kann die Laserstrahlung, beispielsweise bei einem Lichtleitkabel mit nur zwei Faserkernen, auf einfache Weise umgelenkt und in einen jeweilig anderen Faserkern eingekoppelt werden.

Nach einer Ausführungsform ist das Prisma nur teilweise im Strahlengang der Laserstrahlung angeordnet bzw. nur teilweise in diesen hinein bewegbar. Dadurch kann das Prisma als Strahlteiler fungieren, so dass die Laserstrahlung zeitgleich in zumindest zwei Faserkerne des Lichtleitkabels eingekoppelt, d.h. zeitgleich zwei Laserwerkzeugen zugeführt werden kann.

Die Schalteinrichtung weist vorzugsweise eine Steuereinheit auf, um ein, vorzugsweise in eine Betriebssteuerung der Laserbearbeitungsvorrichtung integriertes, Ansteuern der Schalteinrichtung zu ermöglichen.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung gemäß der Ansprüche 1-10. Die Figuren der Zeichnung zeigen den erfindungsgemäßen Gegenstand stark schematisiert und sind nicht maßstäblich zu verstehen.

Es zeigen:
- Fig. 1: eine erfindungsgemäße Laserbearbeitungsvorrichtung mit einem Laser zum Erzeugen von Laserstrahlung, die über ein Lichtleitkabel mit zwei optischen Faserkernen zwei Laserwerkzeugen zuführbar ist, in einer perspektivischen Ansicht;
- Fign. 2a, 2b: eine stirnseitige Ansicht des eingangsseitigen Endes des Lichtleitkabels (Fig. 2a) und eine stirnseitige Ansicht eines ausgangsseitigen Endes des Lichtleitkabels (Fig. 2b);
- Fig. 3: eine Schalteinrichtung der Laserbearbeitungsmaschine gemäß Fig. 1 in einem ersten Schaltzustand;
- Fig. 4: die Schalteinrichtung gemäß Fig. 3 in einer Seitenansicht; und
- Fig. 5: die Schalteinrichtung gemäß Fig. 3 in einem zweiten Schaltzustand, in einer Seitenansicht analog zu Fig. 4.

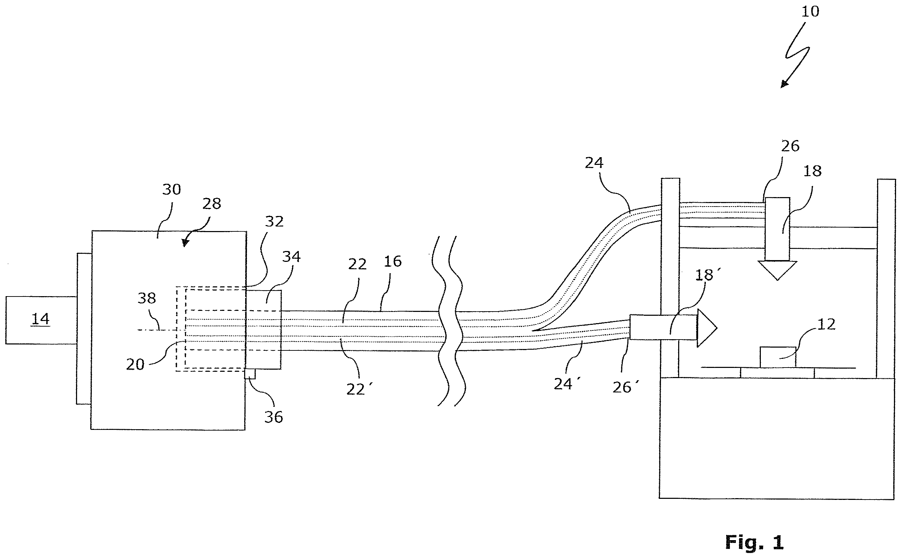

**Fig. 1** zeigt eine Laserbearbeitungsvorrichtung **10** für eine Laserbearbeitung eines Werkstücks **12.** Die Laserbearbeitungsvorrichtung 10 weist einen Laser **14** zum Erzeugen von Laserstrahlung auf, die über ein im Wesentlichen Y-förmiges Lichtleitkabel **16** zwei Laserwerkzeugen **18, 18'** zuführbar ist.

Das Lichtleitkabel 16 weist ein eingangsseitiges Ende **20** mit zwei optischen Faserkernen **22, 22'** auf, die jeweils mit gestrichelten Linien wiedergegeben sind. Das Lichtleitkabel 16 ist in seinem Verlauf in zwei Lichtleitkabelschenkel **24, 24'** aufgezweigt und weist somit zwei separate ausgangsseitige Enden **26, 26'** mit jeweils einem der optischen Faserkerne 22, 22' auf. Die ausgangsseitigen Enden 26, 26' bzw. die optischen Faserkerne 22, 22' sind mit jeweils einem der Laserwerkzeuge 18, 18' verbunden.

Eine dem Laser 14 nachgeschaltete Schalteinrichtung **28** dient dem wahlweisen Einkoppeln der von dem Laser 14 erzeugten Laserstrahlung in jeweils einen der optischen Faserkerne 22, 22'des Lichtleitkabels 16. Die Schalteinrichtung 28 weist ein Gehäuse **30** mit einer Anschlussbuchse **32** auf, in die ein an dem eingangsseitigen Ende 20 des Lichtleitkabels 16 angeordneter Anschlussstecker **34** eingesteckt ist. Der Anschlussstecker 34 und die Anschlussbuchse 32 wirken derart zusammen, dass das Lichtleitkabel 16 mit seinem eingangsseitigen Ende 20 in einer definierten Position und in einer definierten Drehlage bezüglich der Schalteinrichtung 28 positionierbar ist.

Eine Verdrehsicherung **36** dient dazu, ein Verdrehen des in der definierten Drehlage gegenüber der Schalteinrichtung 28 angeordneten eingangsseitigen Endes 20 des Lichtleitkabels 16 bezüglich der Schalteinrichtung 28 auf einen maximalen Verdrehwinkel von +/- 0,03° um die Längsachse **38** des Lichtleitkabels 16 zu beschränken.

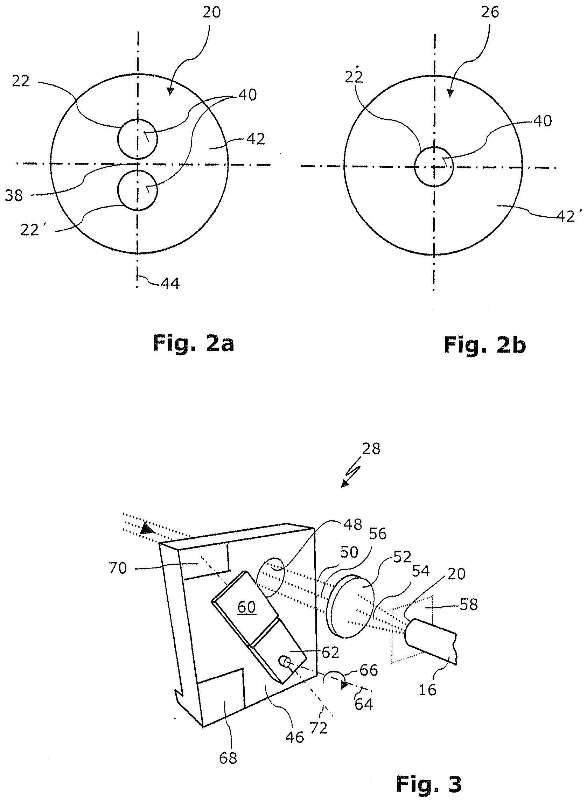

Wie aus der in **Fig. 2a** gezeigten stirnseitigen Draufsicht auf das eingangsseitige Ende 20 des Lichtleitkabels 16 (bei entferntem Anschlussstecker) hervorgeht, weisen die optischen Faserkerne 22, 22' des Lichtleitkabels 16 jeweils kreisrunde eingangsseitige Stirnflächen **40** auf, die jeweils optische Koppelflächen zum Einkoppeln der Laserstrahlung bilden. Die Stirnflächen 40 der Faserkerne 22, 22' weisen vorliegend den gleichen Querschnitt auf. Nach einem in der Zeichnung nicht näher dargestellten Ausführungsbeispiel können die Faserkerne 22, 22' auch unterschiedliche Querschnitte aufweisen. Die Faserkerne 22, 22' sind von einem gemeinsamen Cladding **42** des Lichtleitkabels 16 umhüllt und auf einer die Längsachse 38 des Lichtleitkabels 16 schneidenden Querachse **44** angeordnet.

**Fig. 2b** zeigt eine stirnseitige Draufsicht auf das ausgangsseitige Ende 26 des Lichtleitkabelschenkels 24. Der Faserkern 22 mit seiner ausgangsseitigen Stirnfläche 40 ist mit seiner ausgangsseitigen Stirnfläche mittig angeordnet und von einem koaxialen Cladding **42'** umhüllt.

In **Fig. 3** ist die Schalteinrichtung 28 ohne Gehäuse wiedergegeben. Die Schalteinrichtung 28 weist einen im Wesentlichen plattenförmigen Grundkörper **46** mit einer Durchtrittsöffnung **48** für die Laserstrahlung **50** auf. Zwischen der Durchtrittsöffnung 48 und dem Lichtleitkabel 16 ist eine Sammellinse **52** angeordnet, deren optische Achse **54** vorliegend mit einer Zentralstrahlachse **56** der aus der Durchtrittsöffnung 48 austretenden Laserstrahlung 50 zusammenfällt. Das Lichtleitkabel 16 ist mit seinem eingangsseitigen Ende 20 in seiner vorbestimmten Position in einer hinteren Brennebene **58** der Sammellinse 52 angeordnet. An dem Grundkörper 46 ist ein keilförmiges Prisma **60** angeordnet, das einenends an einem Halteelement **62** befestigt ist. Das Prisma 60 ist um eine Drehachse **64** in Richtung des mit **66** bezeichneten Pfeils in den Strahlengang der Laserstrahlung 50 verschwenkbar. Das Halteelement 62 ist dazu auf einer aus Darstellungsgründen nicht gezeigten Drehwelle angeordnet. Die Drehwelle ist von einem elektrischen Stellmotor **68** betätigbar, zu dessen Steuerung eine Steuereinrichtung **70** vorgesehen ist. Das Halteelement 62 und somit auch das daran befestigte Prisma 60 sind zusätzlich über nicht näher gezeigte Feinjustiermittel um eine zweite Drehachse **72** verschwenkbar.

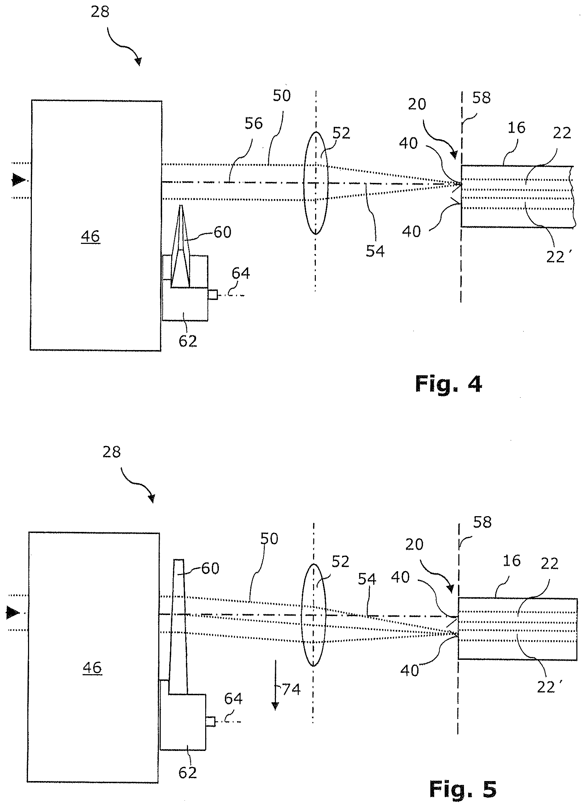

In **Fig. 4** ist der Strahlengang der Laserstrahlung 50 im ersten Schaltzustand der Schalteinrichtung 28 in einer Seitenansicht verdeutlicht. Gut zu erkennen sind die beiden in der Brennebene 58 der Sammellinse 52 angeordneten Stirnflächen 40 der beiden optischen Faserkerne 22, 22'des Lichtleitkabels 16. Die eingangsseitige Stirnfläche 40 des in Fig. 4 oberen optischen Faserkerns 22 ist bei dem hier gezeigten ersten Schaltzustand der Schalteinrichtung 28 auf der optischen Achse 54 der Sammellinse 52 angeordnet. Die Stirnflächen 40 der optischen Faserkerne 22, 22' sind in der vorbestimmten Einbaulage des eingangsseitigen Endes 20 des Lichtleitkabels 16 gegenüber der Schalteinrichtung 28 vertikal übereinander angeordnet, d.h. deren Querachse 44 (Fig. 2a) verläuft im Wesentlichen parallel zu einer nachstehend im Zusammenhang mit Fig. 5 erläuterten Ablenkrichtung der Laserstrahlung 50 durch das Prisma 60.

**Fig. 5** zeigt einen zweiten Schaltzustand der Schalteinrichtung 28, bei dem das Prisma 60 um die erste Drehachse 64 in den Strahlengang der Laserstrahlung 50 verschwenkt ist. Die aus dem Prisma 60 austretende Laserstrahlung 50 ist gegenüber der optischen Achse 54 der Sammellinse 52 in Ablenkrichtung **74** abgelenkt und mittels der Sammellinse 52 in der Brennebene 58 auf die Stirnfläche 40 des optischen Faserkerns 22'des Lichtleitkabels 16 fokussiert.

Nachfolgend werden die Justierung und der Betrieb der Laserbearbeitungsvorrichtung 10 näher erläutert.

Der Anschlussstecker 34 des Lichtleitkabels 16 wird in die Anschlussbuchse 32 der Schalteinrichtung 28 eingesteckt. Die zwei optischen Faserkerne 22, 22'des Lichtleitkabels 16 werden dabei durch das Zusammenwirken des Anschlusssteckers 34 und der Anschlussbuchse 32 mit ihren eingangsseitigen Stirnflächen 40 in der Brennebene 58 der Sammellinse 52 der Schalteinrichtung 28 angeordnet und zusätzlich mit einer solchen Drehlage gegenüber der Schalteinrichtung 28 ausgerichtet, dass die Stirnflächen 40 längs der Querachse 44 (Fig.2) und entlang der durch das Prisma 60 vorgegebenen Ablenkrichtung 74 übereinanderliegend angeordnet sind.

Die Schalteinrichtung 28 wird mittels der Steuereinrichtung 70 in ihren im Zusammenhang mit den Fign 3 und 4 erläuterten ersten Schaltzustand geschaltet, in dem das Prisma 60 außerhalb des Strahlengangs der Laserstrahlung 50 angeordnet ist.

Sofern die eingangsseitige Stirnfläche 40 des optischen Faserkerns 22, beispielsweise aufgrund von Lagetoleranzen des optischen Faserkerns 22 innerhalb des Lichtleitkabels 16 bzw. des Anschlusssteckers 34, nicht exakt auf der optischen Achse 54 der Sammellinse 52 angeordnet ist, wird die Laserstrahlung durch Justieren der Schalteinrichtung 28 auf die eingangsseitige Stirnfläche 40 des optischen Faserkerns 22 fokussiert. Dies kann in hier nicht näher wiedergegebener Weise beispielsweise durch eine kontrollierte relative Verschiebung der Anschlussbuchse 32, der Sammellinse 52 und/oder der Zentralstrahlachse 56 der Laserstrahlung 50 zueinander erfolgen, bis die eingangsseitige Stirnfläche 40 des optischen Faserkerns 22 auf der optischen Achse 54 der Sammellinse 52 zu liegen kommt. Alternativ kann auch die Sammellinse 52 gegenüber der Laserstrahlung 50 entsprechend nachjustiert (verdreht) werden.

In einem weiteren Schritt werden die ausgangsseitigen Enden 26, 26' der beiden Lichtleitkabelschenkel 24, 24'des Laserlichtkabels 16 mit dem jeweilig zugeordneten Laserwerkzeug 18, 18'verbunden.

Nachfolgend wird die Schalteinrichtung 28 mittels der Steuereinrichtung 70 in den im Zusammenhang mit Fig. 5 erläuterten zweiten Schaltzustand überführt, indem das Prisma 60 durch eine Betätigung des Stellmotors 68 um die Drehachse 64 in den Strahlengang der Laserstrahlung 50 verschwenkt wird.

Bei hinreichend präziser Anordnung des anderen optischen Faserkerns 22' wird die Laserstrahlung 50 nunmehr mittels der Sammellinse 52 exakt auf der in der Brennebene 58 der Sammellinse 52 angeordneten eingangsseitigen Stirnfläche 40 des anderen Faserkerns 40 des Lichtleitkabels 16 fokussiert, d.h. in diesen eingekoppelt.

Im Falle einer azimutalen Lageabweichung des Faserkerns 22' gegenüber der Ablenkrichtung 74 des Prismas 60 wird dieses durch dessen Verdrehen um die Justierachse 72 soweit feinjustiert, dass die Laserstrahlung 50 exakt auf der Stirnfläche 40 des zweiten optischen Faserkerns 22' fokussiert wird.

Nach einem solchen Justieren der Schalteinrichtung 28 kann die Laserstrahlung 50 nunmehr durch einen Wechsel des jeweiligen Schaltzustands der Schalteinrichtung 28 bedarfsweise in den einen oder in den anderen optischen Faserkern 22, 22' des Lichtleitkabels 16 eingekoppelt und somit dem einen oder dem anderen Laserwerkzeug 18, 18' der Laserbearbeitungsvorrichtung 10 zugeführt werden.

## Patentansprüche

1. Laserbearbeitungsvorrichtung (10) für eine Laserwerkstückbearbeitung, mit einem Laser (14) zum Erzeugen von Laserstrahlung (50) und mit zumindest zwei Laserwerkzeugen (18, 18'), denen die Laserstrahlung (50) mittels eines Lichtleitkabels (16) zuführbar ist, wobei das Lichtleitkabel (16) ein eingangsseitiges Ende (20) mit mindestens zwei optischen Faserkernen (22, 22') und mehrere ausgangsseitige Enden (26, 26') mit jeweils einem der optischen Faserkerne (22, 22') aufweist und wobei die optischen Faserkerne (22, 22') mit jeweils einem der Laserwerkzeuge (18, 18') verbunden sind,
**dadurch gekennzeichnet,**
**dass** am eingangsseitigen Ende (20) des Lichtleiterkabels (16) die optischen Faserkerne (22, 22') von einem gemeinsamen Cladding (42) des Lichtleiterkabels (16) umhüllt und auf einer die Längsachse (38) des Lichtleitkabels (16) schneidenden Querachse (44) angeordnet sind und dass eine Schalteinrichtung (28) zum wahlweisen Einkoppeln der Laserstrahlung (50) in einen oder in mehrere der optischen Faserkerne (22, 22') des Lichtleitkabels (16) vorgesehen ist.

2. Laserbearbeitungsvorrichtung nach Anspruch 1, **dadurch gekennzeichnet, dass** Anschlussmittel vorgesehen sind, mittels derer das eingangsseitige Ende (20) des Lichtleitkabels (16) in einer definierten Position und in einer definierten Drehlage gegenüber der Schalteinrichtung (28) positioniert ist.

3. Laserbearbeitungsvorrichtung nach Anspruch 2, **dadurch gekennzeichnet, dass** die Anschlussmittel eine an der Schalteinrichtung (28) angeordnete Anschlussbuchse (32) und einen am Lichtleitkabel (16) angeordneten Anschlussstecker (34) aufweisen, der in der Anschlussbuchse (32) positionierbar ist.

4. Laserbearbeitungsvorrichtung nach Anspruch 2 oder 3, **dadurch gekennzeichnet, dass** die Anschlussmittel eine Verdrehsicherung (36) aufweisen, um eine Verdrehung des eingangsseitigen Endes (20) des Lichtleitkabels (16) gegenüber der Schalteinrichtung (28) zu beschränken.

5. Laserbearbeitungsvorrichtung nach einem der vorhergehenden Ansprüche, **dadurch gekennzeichnet, dass** die optischen Faserkerne (22, 22') eingangsseitige, vorzugsweise durch deren Stirnflächen (40) gebildete, optische Koppelflächen aufweisen, die auf einer eine Längsachse (38) des Lichtleitkabels (16) schneidenden Querachse (44) des Lichtleitkabels (16), vorzugsweise symmetrisch zu dieser, angeordnet sind.

6. Laserbearbeitungsvorrichtung nach einem der vorhergehenden Ansprüche, **dadurch gekennzeichnet, dass** die mindestens zwei optischen Faserkerne (22, 22') den gleichen Querschnitt oder unterschiedliche Querschnitte aufweisen.

7. Laserbearbeitungsvorrichtung nach einem der vorhergehenden Ansprüche, **dadurch gekennzeichnet, dass** die Schalteinrichtung (28) optische Umlenkmittel, insbesondere ein Prisma (60), eine Sammellinse (52), ein holografisches optisches Element, ein diffraktives optisches Element, einen Umlenk-, Dach- und/oder einen Facettenspiegel, umfasst.

8. Laserbearbeitungsvorrichtung nach Anspruch 7, **dadurch gekennzeichnet, dass** das Prisma (60) in einen Strahlengang der Laserstrahlung (50) hinein bewegbar, insbesondere in diesen einschwenkbar, ist.

9. Laserbearbeitungsvorrichtung nach Anspruch 7 oder 8, **dadurch gekennzeichnet, dass** das Prisma (60) um zumindest eine Justierachse (72,72') verschwenkbar ist.

10. Laserbearbeitungsvorrichtung nach einem der vorhergehenden Ansprüche, **dadurch gekennzeichnet, dass** der Schalteinrichtung (28) eine Steuereinrichtung (70) zugeordnet ist.

## Claims

1. Laser machining device (10) for a laser workpiece machining operation, having a laser (14) for producing laser radiation (50), and having at least two laser tools (18, 18'), to which the laser radiation (50) can be supplied by means of an optical-fibre cable (16), wherein the optical-fibre cable (16) has an input-side end (20) having at least two optical fibre cores (22, 22') and a plurality of output-side ends (26, 26') each having one of the optical fibre cores (22, 22'), and wherein the optical fibre cores (22, 22') are each connected to one of the laser tools (18, 18'),
**characterized in that** at the input-side end (20) of the optical-fibre cable (16), the optical fibre cores (22, 22') are enclosed by a common cladding (42) of the optical-fibre cable (16) and are arranged on a transverse axis (44) which intersects with the longitudinal axis (38) of the optical-fibre cable (16), and that a switching device (28) is provided for selectively coupling the laser radiation (50) in one or more of the optical fibre cores (22, 22') of the optical-fibre cable (16).

2. Laser machining device according to claim 1, **characterised in that** there are provided connection means, by way of which the input-side end (20) of the optical-fibre cable (16) is positioned in a defined position and in a defined rotation position with respect to the switching device (28).

3. Laser machining device according to claim 2, **characterised in that** the connection means have a connection socket (32) which is arranged on the switching device (28) and a connection plug (34) which is arranged on the optical-fibre cable (16) and which can be positioned in the connection socket (32).

4. Laser machining device according to claim 2 or 3, **characterised in that** the connection means have a rotation prevention (36) in order to limit a rotation of the input-side end (20) of the optical-fibre cable (16) relative to the switching device (28).

5. Laser machining device according to any one of the preceding claims, **characterised in that** the optical fibre cores (22, 22') have input-side optical coupling faces which are preferably formed by the end faces (40) thereof and which are arranged on a transverse axis (44) of the optical-fibre cable (16) which intersects with a longitudinal axis (38) of the optical-fibre cable (16), preferably symmetrically relative thereto.

6. Laser machining device according to any one of the preceding claims, **characterised in that** the at least two optical fibre cores (22, 22') have the same cross-section or different cross-sections.

7. Laser machining device according to any one of the preceding claims, **characterised in that** the switching device (28) comprises optical deflection means, in particular a prism (60), a collecting lens (52), a holographic optical element, a diffractive optical element, a redirection mirror, a roof type mirror and/or a faceted mirror.

8. Laser machining device according to claim 7, **characterised in that** the prism (60) can be moved, in particular pivoted, into a beam path of the laser radiation (50).

9. Laser machining device according to claim 7 or 8, **characterised in that** the prism (60) can be pivoted about at least one adjustment axis (72, 72').

10. Laser machining device according to any one of the preceding claims, **characterised in that** a control device (70) is associated with the switching device (28).

## Revendications

1. Dispositif d'usinage au laser (10) pour l'usinage de pièces au laser, comprenant un laser (14) destiné à produire un rayonnement laser (50) et au moins deux outils laser (18, 18') auxquels le rayonnement laser (50) peut être amené au moyen d'un câble à fibres optiques (16), le câble à fibres optiques (16) comportant une extrémité côté entrée (20) munie d'au moins deux coeurs de fibre optique (22, 22') et plusieurs extrémités côté sortie (26, 26') chacune munies d'un des coeurs de fibre optique (22, 22') et les coeurs de fibre optique (22, 22') étant chacun reliés à un des outils laser (18, 18'),
**caractérisé en ce**
**qu'**à l'extrémité côté entrée (20) du câble à fibres optiques (16), les coeurs de fibre optique (22, 22') sont enveloppés par une gaine commune (42) du câble à fibres optiques (16) et disposés sur un axe transversal (44) coupant l'axe longitudinal (38) du câble à fibres optiques (16), et qu'un dispositif de commutation (28) pour l'injection sélective du rayonnement laser (50) dans un ou dans plusieurs des coeurs de fibre optique (22, 22') du câble à fibres optiques (16) est prévu.

2. Dispositif d'usinage au laser selon la revendication 1, **caractérisé en ce que** des moyens de connexion sont prévus, au moyen desquels l'extrémité côté entrée (20) du câble à fibres optiques (16) est positionnée dans une position définie et dans une position de rotation définie par rapport au dispositif de commutation (28).

3. Dispositif d'usinage au laser selon la revendication 2, **caractérisé en ce que** les moyens de connexion comprennent une douille de connexion (32) disposée sur le dispositif de commutation (28) et une fiche de connexion (34) disposée sur le câble à fibres optiques (16), qui peut être positionnée dans la douille de connexion (32).

4. Dispositif d'usinage au laser selon la revendication 2 ou la revendication 3, **caractérisé en ce que** les moyens de connexion comprennent une sécurité anti-rotation (36) pour limiter une rotation de l'extrémité côté entrée (20) du câble à fibres optiques (16) par rapport au dispositif de commutation (28).

5. Dispositif d'usinage au laser selon l'une des revendications précédentes, **caractérisé en ce que** les coeurs de fibre optique (22, 22') comportent des surfaces de couplage optique côté entrée, formées de préférence par leurs faces frontales (40), qui sont disposées sur un axe transversal (44) du câble à fibres optiques (16) coupant l'axe longitudinal (38) du câble à fibres optiques (16), de préférence symétriquement par rapport à celui-ci.

6. Dispositif d'usinage au laser selon l'une des revendications précédentes, **caractérisé en ce que** lesdits au moins deux coeurs de fibre optique (22, 22') présentent la même section transversale ou des sections transversales différentes.

7. Dispositif d'usinage au laser selon l'une des revendications précédentes, **caractérisé en ce que** le dispositif de commutation (28) comprend des moyens optiques de déviation, en particulier un prisme (60), une lentille convergente (52), un élément optique holographique, un élément optique diffractif, un miroir de renvoi, un miroir dièdre et/ou un miroir à facettes.

8. Dispositif d'usinage au laser selon la revendication 7, **caractérisé en ce que** le prisme (60) peut être amené dans un chemin optique du rayonnement laser (50), en particulier introduit dans celui-ci par pivotement.

9. Dispositif d'usinage au laser selon la revendication 7 ou la revendication 8, **caractérisé en ce que** le prisme (60) peut pivoter autour d'au moins un axe de réglage (72, 72').

10. Dispositif d'usinage au laser selon l'une des revendications précédentes, **caractérisé en ce qu'**un dispositif de commande (70) est associé au dispositif de commutation (28).
